**Europäisches Patentamt**

**European Patent Office**

**Office européen des brevets**

(19)

(11) Veröffentlichungsnummer : **0 355 412 B1**

(12)
# EUROPÄISCHE PATENTSCHRIFT

(45) Veröffentlichungstag der Patentschrift :
**29.04.92 Patentblatt 92/18**

(51) Int. Cl.⁵ : **A46B 3/06,** A46D 3/00,
**B29C 61/00**

(21) Anmeldenummer : **89113388.6**

(22) Anmeldetag : **21.07.89**

(54) **Verfahren zur Herstellung von Borstenwaren.**

(30) Priorität : **23.08.88 DE 3828571**

(43) Veröffentlichungstag der Anmeldung :
**28.02.90 Patentblatt 90/09**

(45) Bekanntmachung des Hinweises auf die
Patenterteilung :
**29.04.92 Patentblatt 92/18**

(84) Benannte Vertragsstaaten :
**AT BE CH DE ES FR GB GR IT LI LU NL SE**

(56) Entgegenhaltungen :
**DE-A- 3 637 750**
**US-A- 3 604 043**

(73) Patentinhaber : **CORONET-WERKE Heinrich
Schlerf GmbH
W-6948 Wald-Michelbach/Odw. (DE)**

(72) Erfinder : **Weihrauch, Georg
Am Rossert 1
W-6948 Wald-Michelbach (DE)**

(74) Vertreter : **Dr.-Ing. Hans Lichti Dipl.-Ing. Heiner
Lichti Dipl.-Phys. Dr. Jost Lempert
Postfach 41 07 60 Bergwaldstrasse 1
W-7500 Karlsruhe 41 (DE)**

## Beschreibung

Die Erfindung betrifft ein Verfahren zur Herstellung von Borstenwaren, bestehend aus einem Borstenträger und darin verankerten Borsten aus thermoplastischem Kunststoff, indem an dem Borstenträger Löcher zur Aufnahme der Borsten ausgebildet, die Borsten an ihren befestigungsseitigen Enden unter Verkürzung ihrer Länge und Bildung einer Verdickung aufgeschmolzen und mit der Verdickung voraus in die Löcher am Borstenträger eingesetzt werden.

Mit dem Aufkommen der thermoplastischen Kunststoffe und ihrem Einsatz bei Borstenwaren hat es nicht an Versuchen gefehlt, die thermoplastischen Eigenschaften solcher Kunststoffe dazu zu nutzen, die Borsten am Borstenträger zu befestigen. Dabei wird insbesondere derart vorgegangen, daß die Borstenbündel an ihrem befestigungsseitigen Ende aufgeschmolzen werden, so daß sich eine Verdickung bildet, die dann zur Befestigung im Borstenträger genutzt wird. So ist es beispielsweise bekannt (US-A-2 664 316), einen Pinsel dadurch herzustellen, daß das Borstenbündel in ein mit einem Hinterschnitt versehenes Durchgangsloch eines Griffs eingeführt und an seinem eingeführten Ende von der Rückseite her aufgeschmolzen wird. Anschließend wird das aufgeschmolzene Material der Borsten gleichfalls von der Rückseite her in den Hinterschnitt verdrängt. Nach dem Erkalten ist das Borstenbündel im Träger fest verankert.

Bei einem anderen bekannten Verfahren (US-A-3 604 043) wird das befestigungsseitige Ende des Borstenbündels während des Schmelzvorgangs zugleich zylindrisch geformt, wobei dessen Außendurchmesser demjenigen der Löcher im Borstenträger entspricht. Die Löcher sind im Bereich des Bodens zu Hinterschnitten aufgeweitet. Das noch plastische Ende des Borstenbündels wird in das Loch unter Druck eingeführt, so daß die plastische Masse in den Hinterschnitt einfließen kann.

Ein ähnliches Verfahren (DE-A-34 00 510) geht von einem Borstenträger mit wulstförmigen Ansätzen an den Lochrändern aus, bei dem zunächst die die Befestigungsseite des Borstenträgers überragenden wulstförmigen Ansätze geglättet und dabei nach innen in die Löcher eingeformt werden, so daß sich Hinterschnitte bilden. In diese Löcher werden dann die noch plastischen, befestigungsseitigen Enden der Borstenbündel unter Druck eingeschoben, so daß die plastische Masse das Loch ausfüllt.

Ebenso ist das Stumpfschweißen von Borstenbündeln auf Borstenträgern aus Kunststoff bekannt (EP-A-0 149 996), wie auch das Einspritzen der befestigungsseitigen Verdickungen von Borstenbündeln in die Kunststoffmasse des Borstenträgers. Solche Einspritzverfahren beschreiben weiterhin die EP-A-0 142 885 und die DE-C-35 11 528. Schließlich werden bei einem anderen bekannten Verfahren (DE-A-34 03 341) die speziellen Eigenschaften von Kunststoffen, nämlich die bei Erwärmung stattfindende molekulare Umorientierung genutzt, indem die Verdickung an den befestigungsseitigen Enden der Borsten in einen ebenen Borstenträger, dessen Oberfläche aufgeschmolzen ist, eingedrückt wird. Die Schmelze des Borstenträgers fließt hinter der Verdickung zusammen, da der Kunststoff durch molekulare Reorientierung bestrebt ist, seine ursprüngliche Form wieder anzunehmen. Mit dem letztgenannten Verfahren ist es insbesondere erstmals gelungen, eine dem Schweißen ähnliche Verbindung zu schaffen, bei der Borstenträger und Borsten aus verschiedenen Kunststoffen bestehen können.

Schließlich ist es bekannt (DE-A-36 37 750), nur die Löcher im Borstenträger, insbesondere am Lochgrund aufzuschmelzen und die freien Borstenenden in die fließfähige Schmelze einzustoßen, so daß diese zwischen den Borsten und zwischen diesen und der Lochwandung aufsteigt. Nach dem Erkalten sollen die Borsten durch das eingedrungene Material des Borstenträgers verankert sein.

Allen vorgenannten Verfahren ist der Nachteil gemeinsam, daß aufgrund der Verarbeitung der Borsten und-/oder des Borstenträgers nahe oder oberhalb der Schmelz- bzw. Fließtemperatur oder - bei teilkristallinen Thermoplasten - der Kristallitschmelztemperatur eine erhebliche Zeitspanne für das Erkalten bis zum Erreichen einer auszugsfesten Verbindung verstreicht. Hierdurch ergeben sich lange Maschinen-Taktzeiten.

Der Erfindung liegt die Aufgabe zugrunde, ein Verfahren vorzuschlagen, bei dem eine Verbindung von Borsten aus thermoplastischem Kunststoff mit beliebigen Borstenträgern bei geringstem Zeitbedarf möglich ist.

Diese Aufgabe wird erfindungsgemäß dadurch gelöst, daß die Löcher im Borstenträger mit einem zumindest bereichsweise kleineren freien Querschnitt als der Querschnitt der Verdickungen an den Borstenenden ausgebildet werden, und daß die Verdickungen und/oder die Wandung der Löcher auf eine zwischen der Einfriertemperatur und der Fließtemperatur bei amorphen bzw. auf eine zwischen jener und der Kristallitschmelztemperatur bei teilkristallinen Thermoplasten liegenden Fügetemperatur erwärmt bzw. auf dieser Fügetemperatur, bei der sich die Thermoplaste im entropieelastischen Zustand befinden, gehalten und in diesem Zustand die Verdickungen in die Löcher durch Warmverformen eingesetzt werden.

Im Gegensatz zum Stand der Technik nutzt die Erfindung für den Verbindungsvorgang nicht das plastische Verhalten des Kunststoffs oberhalb der Kristallitschmelz- oder Fließtemperatur aus, sondern die sogenannte Entropieelastizität (Thermoelastizität) aller thermoplastischen Kunststoffe oberhalb derjenigen Temperatur (Einfriertemperatur), bei der die molekulare Orientierung einfriert, jedoch unterhalb derjenigen Temperatur (Fließtemperatur bei amorphen bzw. Kristallitschmelztemperatur bei teilkristallinen Thermoplasten), in der der Molekülverband soweit aufgelöst ist, daß der Thermoplast zu fließen beginnt und sich molekular nicht mehr rückbildet. Wird ein thermoplastischer Kunststoff auf eine solche Fügetemperatur oberhalb der Einfriertemperatur erwärmt, so läßt er sich mit relativ geringen Kräften umformen. Beim Erkalten versucht der Thermoplast aufgrund molekularer Reorientierung wieder die ursprüngliche Form anzunehmen. Die dabei eintretende Formänderung nutzt die Erfindung für den Vorgang des Verbindens von Borsten und Borstenträger aus. Dabei wird im einzelnen wie folgt vorgegangen:

Borsten in monofiler oder multifiler Anordnung werden an ihren befestigungsseitigen Enden zunächst aufgeschmolzen. Dabei geht in bekannter Weise die ursprünglich gestreckte Molekularstruktur in eine geknäuelte Molekularstruktur über, die unter Verkürzung der Borstenlänge zu einer Verdickung am befestigungsseitigen Ende führt. Beim Abkühlen bleibt diese Struktur erhalten, wobei die Einfriertemperatur (beim Erwärmen auch "Erweichungstemperatur" genannt) bei den amorphen Thermoplasten oberhalb, bei den teilkristallinen Thermoplasten unterhalb der Raumtemperatur liegt. Werden die Borsten mit ihrer Verdickung bei einer erhöhten Temperatur, die jedenfalls oberhalb der Einfriertemperatur und vorzugsweise nahe unterhalb der Fließtemperatur (bei amorphen Thermoplasten) bzw. im Bereich der Kristallitschmelztemperatur (bei teilkristallinen Thermoplasten) liegt, in die Löcher am Borstenträger unter Druck oder Zug eingesetzt, so erfährt die Verdickung beim Passieren der Querschnittsverengung des Lochs unter Aufbau von inneren Spannungen eine Formänderung aufgrund der Thermoelastizität des Kunststoffs. Beim Abkühlen versucht der Kunststoff im Bereich der Verdickung unter Abbau der inneren Spannungen wieder die ursprüngliche Form der Verdickung anzunehmen (Relaxation), woran er durch die Querschnittsverengung gehindert wird. Hierdurch bleiben die inneren Spannungen zumindest teilweise erhalten, die als Einspannkräfte für die Borsten in dem Loch des Borstenträgers genutzt werden. Dieser Effekt tritt unabhängig von dem Werkstoff des Borstenträgers ein, so daß hierfür beliebige Werkstoffe eingesetzt werden können. Besteht auch der Borstenträger aus einem Thermoplast, so kann auch nur die Lochwandung auf die erhöhte Temperatur erwärmt werden. In diesem Fall sorgt die Relaxation der Lochwandung für die Einspannung der Borsten bzw. ihrer Verdickung. Bei dieser Werkstoffpaarung können auch beide, also die Verdickung an den Borstenenden und die Lochwandung auf Fügetemperatur gebracht werden. In allen Fällen handelt es sich um ein Warmumformen.

Auf diese Weise wird ein fester Sitz der Borsten im Borstenträger erreicht. Der große Vorteil des erfindungsgemäßen Verfahrens liegt darin, daß das Aufschmelzen der Borstenenden zur Bildung der Verdickung in einer von dem eigentlichen Verbindungsvorgang getrennten Verfahrensstufe erfolgen kann und das eigentliche Verbinden bei niedrigerer Temperatur als der Fließtemperatur durchgeführt wird, so daß für das endgültige Abkühlen auf eine ausreichend niedrige Handhabungstemperatur eine wesentlich geringere Temperaturdifferenz überwunden werden muß und das sonst notwendige Abführen der Schmelzwärme entfällt, was zu einer bedeutsamen Verringerung der Maschinen-Taktzeit für den eigentlichen Verbindungsvorgang führt.

Nachfolgend sind die maßgeblichen Temperaturen für einige Thermoplaste angegeben:

## Teilkristalline Thermoplaste

| | Einfrier- (Erweichungs- oder Glas-)temperatur ET | Kristallitschmelz- temperatur KT |
|---|---|---|
| PE | − 125 °C | + 135 °C |
| PP | − 20 °C | + 165 °C |
| PA 6.6 | + 57 °C | + 265 °C |

## Amorphe Thermoplaste

| | Einfrier-(Erweichungs- oder Glas-)temperatur ET | Fließ-(Schmelz-) temperatur FT |
|---|---|---|
| PVC | + 80 °C | + 170 °C |
| PS | + 90 °C | + 180 °C |

Die Fügetemperatur von Borsten und Borstenträger wird man bei einer Werkstoffpaarung Thermoplast/Thermoplast von Borstenträger und Borsten vorzugsweise in den Bereich der niedrigeren KT bzw. FT der beiden beteiligten Fügepartner legen und damit in erster Linie die Formänderung dieses Fügepartners ausnutzen. So wurde beispielsweise bei Borsten aus PA (Polyamid) mit der sehr hohen Kristallitschmelztemperatur von 265 Grad Celsius und einem Borstenträger aus PP (Polypropylen) bei einer nahe dessen Kristallitschmelztemperatur von 165 Grad Celsius liegenden Fügetemperatur eine hervorragende Verankerung der Borsten erreicht. Besteht hingegen der Borstenträger aus einem starren Werkstoff, der kein thermoelastisches Verhalten in dem hier zur Rede stehenden Temperaturbereich zeigt, muß man die Fügetemperatur entsprechend dem beteiligten Thermoplast der Borsten, bei PA also in den Bereich von 265 Grad Celsius legen. Generell kann ferner gesagt werden, daß sich größte Formänderungen bei teilkristallinen Thermoplasten im Bereich der KT, bei amorphen Thermoplasten hingegen im mittleren Bereich zwischen ET und FT erzielen lassen.

Gemäß einem Ausführungsbeispiel der Erfindung ist vorgesehen, daß für den Borstenträger ein Thermoplast verwendet wird, der bei der Fügetemperatur einen kleineren Verformungswiderstand aufweist als der verwendete Thermoplast.

Bei dieser Ausführung wird also, wie bei dem oben genannten Werkstoff-Beispiel, im wesentlichen nur die Formänderung und Relaxation des Borstenträger-Materials genutzt.

Statt dessen kann gemäß einem anderen Ausführungsbeispiel vorgesehen sein, daß für den Borstenträger ein Thermoplast verwendet wird, der bei der Fügetemperatur einen größeren Verformungswiderstand aufweist als der für die Borsten verwendete Thermoplast. In diesem Fall beschränkt sich die Formänderung im wesentlichen auf die Verdickung an den befestigungsseitigen Enden der Borsten.

Es hat sich gezeigt, daß beim erfindungsgemäßen Verfahren auch Borstenträger aus völlig anderen Werkstoffen, z. B. aus Holz oder Duroplasten, eingesetzt werden können. Auch dort findet eine einwandfreie Verankerung der Borsten statt. Dabei wird immer ein Formschluß erhalten. Bei einem starren Borstenträger, z. B. aus Holz oder Duroplast, können als Querschnittsverengung Oberflächenrauhigkeiten ausreichen, in die der thermoplastische Kunststoff der Borsten durch Relaxation eindringt.

Es hat sich weiterhin als vorteilhaft erwiesen, wenn der Fügevorgang mit einer derart erhöhten Geschwindigkeit durchgeführt wird, daß die Fügezeit unterhalb der Relaxationszeit des bzw. der beteiligten Thermoplaste liegt. Dabei macht sich die Erfindung die Tatsache zunutze, daß der Verformungswiderstand mit zunehmender Verformungsgeschwindigkeit gleichfalls zunimmt, d. h. der Fügepartner erscheint härter als er aufgrund seiner Temperatur sein dürfte. Auf diese Weise ist es beispielsweise möglich, die Verdickung an den Borstenenden relativ kurze Zeit nach dem Aufschmelzen in den Borstenträger einzusetzen.

In weiterhin bevorzugter Ausführung des Verfahrens ist vorgesehen, daß die Löcher am Borstenträger im Bereich des Lochrandes mit einem größeren freien Querschnitt als die Verdickung an den Borstenenden und daran anschließend mit einem bis zum engsten Querschnitt abnehmenden Querschnitt ausgebildet werden.

Durch den größeren freien Querschnitt der Löcher im Bereich des Lochrandes und dessen stetige Verengung zum engsten Querschnitt entsteht eine Art Einführschräge, die das Einbringen der Verdickung in das Loch erleichtert und gegebenenfalls zur Aufnahme von verdrängtem Material dienen kann

Werden die Löcher gemäß einem weiteren Ausführungsbeispiel der Erfindung in Einführrichtung der Borsten hinter dem engsten Querschnitt mit einer Querschnittserweiterung versehen, so kann der Raum hinter dem engsten Querschnitt zur Relaxation der zuvor verformten Verdickung genutzt werden. Auf diese Weise wird ein sicherer Formschluß erhalten.

Eine weitere Ausführung des erfindungsgemäßen Verfahrens zeichnet sich dadurch aus, daß der Rand der Löcher am Borstenträger nach dem Einsetzen der Borsten an diese angeformt wird.

Dadurch wird vor allem eine von Löchern bzw. Vertiefungen freie Oberfläche erhalten, die wirksam gegen Verschmutzungen schützt. Bei dem Glätten der Oberfläche kann auch das evtl. zu stark zurückgedrängte Material der Verdickungen angedrückt werden.

Eine weitere Variante des erfindungsgemäßen Verfahrens zeichnet sich dadurch aus, daß die Verdickungen an den Borstenenden und die Wandung der Löcher des gleichfalls aus einem Thermoplast bestehenden Borstenträgers auf eine zwischen der Einfriertemperatur und der Fließtemperatur bei amorphen bzw. auf eine zwischen jener und der Kristallitschmelztemperatur bei teilkristallinen Thermoplasten liegende Fügetemperatur erwärmt bzw. auf dieser Fügetemperatur, bei der sich die Thermoplaste im entropieelastischen Zustand befinden, gehalten und in diesem Zustand die Verdickungen in die Löcher eingeführt und auf dem Lochgrund unter Warmverformen der Lochwand nach außen aufgestaucht werden.

Hierbei werden die gleichen Effekte genutzt, indem nach dem Aufstauchen der Verdickung auf den Lochgrund die Lochwandung sich zunächst aufweitet und dann unter Einspannen der verformten Verdickung relaxiert.

Prinzipiell kann für den Borstenträger jede beliebige Geometrie verwendet werden. Für die Durchführung des erfindungsgemäßen Verfahrens hat sich jedoch ein Borstenträger als vorteilhaft erwiesen, der sich dadurch auszeichnet, daß er aus einem plattenförmigen Trägerteil mit dieses an der Borstenseite oder an der Rückseite überragenden hülsenförmigen Ansätzen gebildet ist, und daß sich die die Borsten aufnehmenden Löcher am Borstenträger zumindest über einen größeren Teil ihrer axialen Erstreckung innerhalb der Ansätze befinden.

Bei dieser Ausführungsform läßt sich die Lochwandung aufgrund ihrer geringeren Wandstärke schneller auf die erforderliche Fügetemperatur bringen als bei einem massiven Borstenträger.

Nachstehend ist die Erfindung anhand von in der Zeichnung wiedergegebenen Ausführungsbeispielen beschrieben. In der Zeichnung zeigen:

Figur 1.1 - 1.4 eine schematische Darstellung des Ablaufs des Verfahrens in einer ersten Ausführungsform;

Figur 2.1 - 2.7 eine schematische Darstellung des Verfahrensablaufs in einer zweiten Ausführung;

Figur 3 eine der Figur 1 entsprechende Darstellung einer Variante des Borstenträgers;

Figur 4.1 - 4.3 eine schematische Darstellung des Ablaufs des Verfahrens in einer weiteren Ausgestaltung;

Figur 5 - 9 verschiedene Ausführungsformen des Borstenträgers für die Durchführung des Verfahrens.

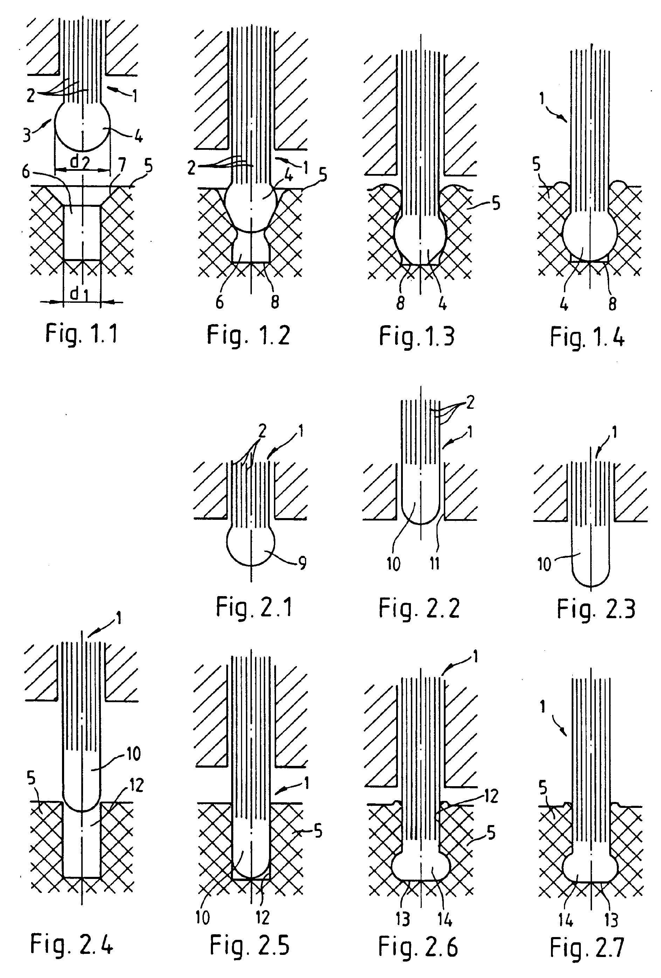

In Figur 1.1 ist ein Borstenbündel 1 mit einer Vielzahl von Borsten 2 aus einem Thermoplast gezeigt, das an seinem befestigungsseitigen Ende 3 eine Verdickung 4 aufweist. Ferner ist ein Ausschnitt aus einem Borstenträger 5 mit einem Loch 6 wiedergegeben. Das Loch 6 weist zumindest bereichsweise - im gezeigten Ausführungsbeispiel über den größten Teil seiner Länge - einen freien Querschnitt bzw. einen Durchmesser $d_1$ auf, der geringer ist als der Querschnitt bzw. der Durchmesser $d_2$ der Verdickung 4 am befestigungsseitigen Ende 3 des Borstenbündels 1. Ferner weist das Loch 6 einen erweiterten Rand 7 auf, der, wie später beschrieben wird, zunächst als Einlaufschräge für die Verdickung 4 dient.

Die Verdickung 4 am befestigungsseitigen Ende 3 des Borstenbündels 1 wird dadurch erhalten, daß die freien Enden der Borsten thermisch oder durch Ultraschall aufgeschmolzen werden, wodurch sich die Borsten in ihrer Länge verkürzen und die Schmelze zu einer Schmelzperle zusammenfließt, die etwa kugelförmige Gestalt annimmt und diese beim Erkalten beibehält. Bei amorphen Thermoplasten erfolgt das Schmelzen bei Erreichen der Fließtemperatur, bei teilkristallinen Thermoplasten im Bereich der Kristallitschmelztemperatur. Die sich in der Verdickung ausbildende Molekularstruktur wird bei Erreichen einer bestimmten Temperatur, die bei teilkristallinen Thermoplasten mehr oder weniger über der Raumtemperatur liegt, eingefroren. In dem Bereich zwischen der Fließtemperatur und der Einfriertemperatur ist die Verdickung durch Umformkräfte aufgrund ihrer entropieelastischen Eigenschaften noch gut formbar. In diesem Zustand wird das Borstenbündel 1 mit seinem befestigungsseitigen Ende 3 in das Loch 6 am Borstenträger 5 eingeführt.

Bei dem in Figur 1 gezeigten Ausführungsbeispiel besteht auch der Borstenträger 5 aus einem Thermoplast, vorzugsweise einem solchen, dessen Verformungswiderstand bei der erhöhten Fügetemperatur geringer ist als der des Borstenmaterials. Das Loch 6 bzw. die Lochwandung wird auf eine erhöhte Temperatur erwärmt, die - je nach Art des Thermoplastes - jedenfalls unterhalb der Fließ- bzw. Kristallitschmelztemperatur liegt. Daraufhin wird das Borstenbündel 1 mit der Verdickung 4 in das Loch 6 eingeschoben bzw. eingestoßen (Figur 1.2), wobei sich die Verdickung 4 am Ende der Einlaufschräge 7 zu verformen beginnt und gleichzeitig die Wandung des Lochs 6 thermoelastisch nachgibt und etwas nach unten ausgeformt wird. Aufgrund dieser Thermoelastizität des Borstenträgermaterials und des größeren Verformungswiderstandes des Borstenmaterials wird das Material der Lochwandung nach oben verdrängt und die Verdickung stößt schließlich auf den Boden 8 des Lochs auf. Aufgrund des thermoelastischen Verhaltens und der unterschiedlichen Verformungswiderstände nimmt die Verdickung 4 wieder ihre ursprüngliche Form an, während die Lochwandung aufgrund der Relaxation des Borstenträgermaterials die Verdickung 4 dicht umschließt (Figur 1.4). In dieser Position ist das Borstenbündel 1 im Borstenträger 5 fest verankert.

In Figur 2 ist eine andere Ausführungsform in ihrem verfahrenstechnischen Ablauf beschrieben. Es werden auch hier die Borsten 2 an ihren Enden zu einer Verdickung 9 aufgeschmolzen, die in einem anschließenden Arbeitsgang (Figur 2.2) zu einem zylindrischen Endteil 10 geformt wird, indem beispielsweise das Borstenbündel 1 in eine Matrize 11 zurückgezogen wird (Figur 2. 2). Der Borstenträger 5 weist in diesem Fall ein zylindrisches Loch 12 auf, das etwa den gleichen Querschnitt besitzt wie das zylindrische Endteil 10 am Borstenbündel 1. Auch hier wird die Lochwandung wiederum auf eine Temperatur unterhalb der Fließ- bzw. Kristallitschmelztemperatur erwärmt. Auch das zylindrische Endteil 10 am Borstenbündel 1 befindet sich auf einer erhöhten Temperatur. Das Borstenbündel 1 wird mit seinem zylindrischen Endteil 10 mit vorzugsweise erhöhter Geschwindigkeit in das Loch 12 eingestoßen (Figur 2.4 und 2.5). Beim Auftreffen des zylindrischen Endteils 10 auf den Boden 13 des Lochs 12 wird das Endteil 10 aufgestaucht und in der in Figur 2.6 wiedergegebenen Weise verformt, wobei das Material des Borstenträgers 5 unmittelbar oberhalb des Bodens 13 des Lochs 12 thermoelastisch nachgibt und teilweise nach oben ausweicht. Auch hier ist vorzugsweise der Verformungswiderstand des Borstenträgermaterials geringer als der des Borstenmaterials, so daß das beim Aufstauchen verformte Endteil 14 seine Form beibehält und im endgültig erkalteten Zustand fest in das Borstenträgermaterial eingespannt ist (Figur 2.6 und 2.7).

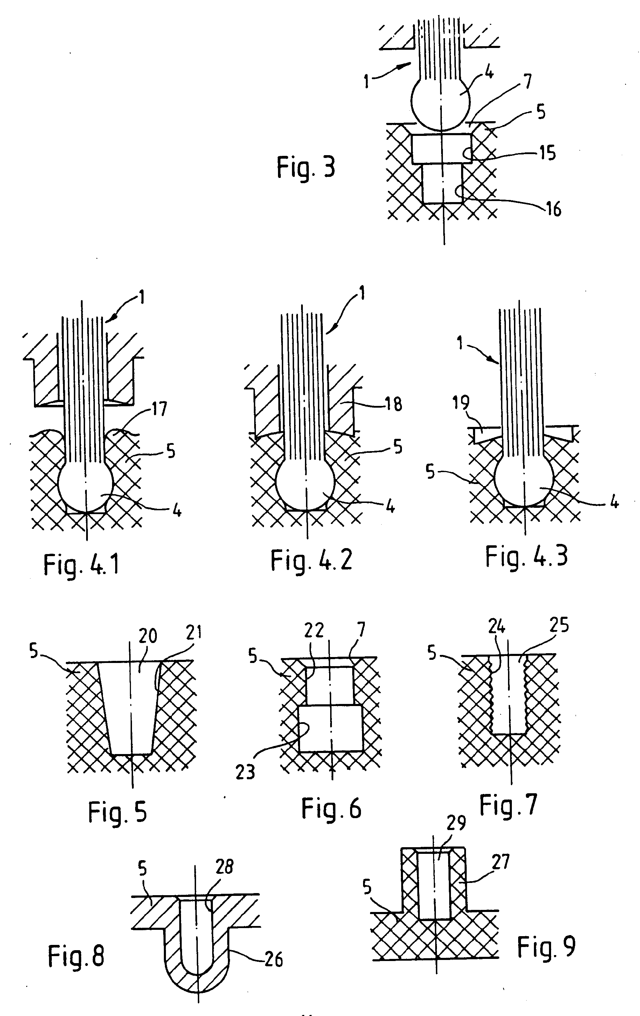

In Figur 3 ist eine Ausführungsform eines Borstenträgers mit einer anderen Gestaltung des Lochs gezeigt. Das Loch weist wiederum eine Einlaufschräge 7 ähnlich der in Figur 1 auf. Es weist daran anschließend einen zylindrischen Abschnitt 15 auf, dessen Durchmesser etwa dem der Verdickung 4 entspricht. Über eine Stufe schließt sich ein weiterer zylindrischer Abschnitt 16 an, der im Querschnitt gegenüber der Verdickung 4 verengt ist. Durch Erwärmen der Lochwandung und eine erhöhte Temperatur an der Verdickung 4 findet wiederum ein Fügevorgang statt, an dessen Ende die in Figur 4.1 gegebene Situation erreicht ist. Anschließend wird bei diesem Ausführungsbeispiel das nach oben verdrängte Material 17 des Borstenträgers mittels eines Formwerkzeugs 18 angeformt, so daß sich eine glatte, gegebenenfalls mit Einsenkungen 19 versehene Oberfläche am Borstenträger 5 ausbildet (Figur 4.2 und 4.3).

In den Figuren 5 und 6 sind weitere Ausführungsformen des Borstenträgers 5 gezeigt. Bei dem Ausführungsbeispiel gemäß Figur 5 ergibt sich die Querschnittsverengung des Lochs 20 gegenüber der nicht gezeigten Verdickung am Borstenbündel durch einen konischen Verlauf der Lochwandung 21. Der Querschnitt kann dabei im Einlaufbereich dem der Verdickung entsprechen und anschließend stetig kleiner werden. Beim Ausführungsbeispiel gemäß Figur 6 ist wiederum eine Einlaufschräge 7, daran anschließend eine Querschnittsverengung 22 und in deren Anschluß wiederum eine Querschnittserweiterung 23 vorgesehen.

In Figur 7 ist ein Borstenträger 5 aus einem auch bei erhöhter Temperatur starren Material, z. B. aus Holz oder Metall, gezeigt. Er kann mit willkürlich angebrachten oder vom Material her vorgegebenen Oberflächenrauhigkeiten 24 im Bereich der Wandung des Lochs 25 versehen sein. Wird die Verdickung 4 des Borstenbündels bei einer nahe unterhalb der Fließ- bzw. Kristallitschmelztemperatur liegenden Temperatur in das Loch 25 eingeführt, so verformt sich die Verdickung thermoelastisch und relaxiert in die Oberflächenrauhigkeiten 24.

Bei dem Ausführungsbeispiel gemäß Figur 8 und 9 ist der Borstenträger 5 plattenförmig ausgebildet und mit hülsenförmigen Ansätzen 26 auf seiner Rückseite oder hülsenförmigen Ansätzen 27 auf seiner Borstenseite ausgestattet, wobei das Loch 28, 29 zur Fixierung des Borstenbündels sich weitgehend innerhalb des hülsenförmigen Ansatzes 26, 27 befindet. Auch hier wird die Lochwandung auf eine erhöhte Temperatur erwärmt und das Borstenbündel in einer der zuvor beschriebenen Art und Weise eingefügt.

**Patentansprüche**

1. Verfahren zur Herstellung von Borstenwaren, bestehend aus einem Borstenträger und darin verankerten Borsten aus thermoplastischem Kunststoff, indem an dem Borstenträger Löcher zur Aufnahme der Borsten ausgebildet, die Borsten an ihren befestigungsseitigen Enden unter Verkürzung ihrer Länge und Bildung einer Verdickung aufgeschmolzen und mit der Verdickung voraus in die Löcher am Borstenträger eingesetzt werden, dadurch gekennzeichnet, daß die Löcher im Borstenträger mit einem zumindest bereichsweise kleineren freien Querschnitt als der Querschnitt der Verdickungen an den Borstenenden ausgebildet werden, und daß die Verdickungen und/oder die Wandung der Löcher auf eine zwischen der Einfriertemperatur und der Fließtemperatur bei amorphen bzw. auf eine zwischen jener und der Kristallitschmelztemperatur bei teilkristallinen Thermoplasten liegenden Fügetemperatur erwärmt bzw. auf dieser Fügetemperatur, bei der sich die Thermoplaste im entropieelastischen Zustand befinden, gehalten und in diesem Zustand die Verdickungen in die Löcher durch Warmverformen eingesetzt werden.

2. Verfahren nach Anspruch 1, dadurch gekennzeichnet, daß für den Borstenträger ein Thermoplast verwendet wird, der bei der Fügetemperatur einen kleineren Verformungswiderstand aufweist als der verwendete Thermoplast.

3. Verfahren nach Anspruch 1, dadurch gekennzeichnet, daß für den Borstenträger ein Thermoplast verwendet wird, der bei der Fügetemperatur einen größeren Verformungswiderstand aufweist als der für die Borsten verwendete Thermoplast.

4. Verfahren nach Anspruch 1, dadurch gekennzeichnet, daß für den Borstenträger ein bei der Fügetemperatur starrer Werkstoff, z. B. Holz, Metall od. dgl., verwendet wird.

5. Verfahren nach Anspruch 4, dadurch gekennzeichnet, daß bei einem Borstenträger aus starrem Werkstoff der gegenüber der Verdickung an den Borsten bereichsweise kleinere Querschnitt von Oberflächenrauhigkeiten oder -unebenheiten der Wandung der Löcher gebildet wird.

6. Verfahren nach einem der Ansprüche 1 bis 5, dadurch gekennzeichnet, daß der Fügevorgang mit einer derart erhöhten Geschwindigkeit durchgeführt wird, daß die Fügezeit unterhalb der Relaxationszeit des bzw. der beteiligten Thermoplaste liegt.

7. Verfahren nach einem der Ansprüche 1 bis 6, dadurch gekennzeichnet, daß der Borstenträger und/oder die Borsten unmittelbar nach dem Fügen abgekühlt werden.

8. Verfahren nach einem der Ansprüche 1 bis 7, dadurch gekennzeichnet, daß die Löcher am Borstenträger im Bereich des Lochrandes mit einem größeren freien Querschnitt als die Verdickung an den Borstenenden und daran anschließend mit einem bis zum engsten Querschnitt abnehmenden Querschnitt ausgebildet werden.

9. Verfahren nach einem der Ansprüche 1 bis 8, dadurch gekennzeichnet, daß die Löcher am Borstenträger in Einführrichtung der Borsten hinter dem engsten Querschnitt mit einer Querschnittserweiterung versehen werden.

10. Verfahren nach einem der Ansprüche 1 bis 9, dadurch gekennzeichnet, daß der Rand der Löcher am Borstenträger nach dem Einsetzen der Borsten an diese angeformt wird.

11. Verfahren nach einem der Ansprüche 1 bis 10, dadurch gekennzeichnet, daß die Verdickungen an den Borstenenden und die Wandung der Löcher des gleichfalls aus einem Thermoplast bestehenden Borstenträgers auf eine zwischen der Einfriertemperatur und der Fließtemperatur bei amorphen bzw. auf eine zwischen jener und der Kristallitschmelztemperatur bein teilkristallinen Thermoplasten liegenden Fügetemperatur erwärmt bzw. auf dieser Fügetemperatur, bei der sich die Thermoplaste im entropieelastischen Zustand befinden, gehalten und in diesem Zustand die Verdickungen in die Löcher eingeführt und auf dem Lochgrund unter Warmverformen der Lochwandung nach außen aufgestaucht werden.

12. Borstenträger zur Herstellung einer Borstenware nach dem Verfahren gemäß einem der Ansprüche 1 bis 11, dadurch gekennzeichnet, daß er (5) aus einem plattenförmigen Trägerteil mit dieses an der Borstenseite oder an der Rückseite überragenden hülsenförmigen Ansätzen (26, 27) gebildet ist, und daß sich die die Borsten (2) aufnehmenden Löcher (28, 29) am Borstenträger zumindest über einen größeren Teil ihrer axialen Erstreckung innerhalb der Ansätze befinden.

## Claims

1. Process for producing bristle articles, comprising a bristle carrier and thermoplastic bristles anchored therein, in that on the bristle carrier are formed holes for receiving the bristles, the bristles are melted at their fastening-side ends accompanied by the shortening of their length and the formation of a thickened portion and with the thickened portion first are inserted in the holes on the bristle carrier, characterized in that the holes in the bristle carrier are formed with an at least zonally smaller free cross-section than the cross-section of the thickened portions at the bristle ends and that the thickened portions and/or the wall of the holes are heated to a joining temperature between the transition temperature and the flow temperature in the case of amorphous thermoplastics or to a temperature between the same and the crystallite melting temperature in the case of partly crystalline thermoplastics or are kept at this joining temperature at which the thermoplastics are in the entropy-elastic state and in this state the thickened portions are inserted in the holes by thermoforming.

2. Process according to claim 1, characterized in that a thermoplastic material is used for the bristle carriers, which at the joining temperature has a smaller deformation resistance than the thermoplastic used.

3. Process according to claim 1, characterized in that a thermoplastic material is used for the bristle carrier, which at the joining temperature has a greater deformation resistance than the thermoplastic material used for the bristles.

4. Process according to claim 1, characterized in that for the bristle carrier use is made of a material, e.g. wood, metal, etc. which is rigid at the joining temperature.

5. Process according to claim 4, characterized in that in the case of a bristle carrier made from rigid material the cross-section which is zonally smaller than the thickened portion on the bristles is formed by surface roughnesses or unevennesses of the wall of the holes.

6. Process according to one of the claims 1 to 5, characterized in that the joining process is performed at such an increased speed that the joining time is below the relaxation time of the participating thermoplastic material or materials.

7. Process according to one of the claims 1 to 6, characterized in that the bristle carrier and/or the bristles are cooled immediately after joining.

8. Process according to one of the claims 1 to 7, characterized in that the holes on the bristle carrier are formed in the vicinity of the rim of the hole with a larger free cross-section than the thickened portion at the bristle ends and following onto the same are formed with a cross-section decreasing to the narrowest cross-section.

9. Process according to one of the claims 1 to 8, characterized in that the holes on the bristle carrier are provided with a cross-sectional widening in the bristle insertion direction behind the narrowest cross-section.

10. Process according to one of the claims 1 to 9, characterized in that the rim of the holes on the bristle carrier following the insertion of the bristles is shaped onto the same.

11. Process according to one of the claims 1 to 10, characterized in that the thickened portions on the bristle ends and the wall of the holes of the thermoplastic bristle carrier are heated to a joining temperature between the transition temperature and the flow temperature for amorphous thermoplastics or to a temperature between the latter and the crystallite melting temperature for partly crystalline thermoplastics or are kept at this joining temperature in which the thermoplastics are in the entropy-elastic state and in this state the thickened portions are inserted in the holes and on the base of the hole bulged outwards accompanied by the thermosetting of the wall of the hole.

12. Bristle carrier for producing a bristle article according to the process of one of the claims 1 to 11, characterized in that it (5) is formed from a plate-like carrier part with sleeve-like attachments (26, 27) projecting over it on the bristle side or on the rear side and that the holes (28, 29) on the bristle carrier receiving the bristles (2) are located within the attachments over at least most of their axial extension.

## Revendications

1. Procédé de fabrication de brosses comprenant un support de brosse dans lequel sont ancrés des poils en matière thermoplastique, des trous étant conformés dans le support de brosse pour la réception des poils, les poils étant fondus à leurs extrémités du côté fixation, avec réduction de leur longueur et formation d'un épaississement, et engagés avec l'épaississement vers l'avant dans les trous du support de brosse, **caractérisé en ce** que les trous dans le support de brosse sont conformés avec une section transversale qui est plus petite, au moins par endroits, que la section transversale des épaississements aux extrémités des poils, et que les épaississements et/ou la paroi des trous sont portés à une température d'assemblage située entre la température de solidification et la température de fluage pour des matières thermoplastiques amorphes et respectivement entre celle-ci et la température de fusion des cristallites, pour des matières thermoplastiques partiellement cristallines, et respectivement maintenus à cette température d'assemblage à laquelle les matières thermoplastiques se trouvent dans un état caoutchoutique et que les épaississements sont insérés à cet état dans les trous par formation à chaud.

2. Procédé selon la revendication 1, caractérisé en ce que pour le support de brosse est utilisée une matière thermoplastique qui, à la température d'assemblage, présente une résistance à la déformation plus faible que la matière thermoplastique mise en oeuvre.

3. Procédé selon la revendication 1, caractérisé en ce que pour le support de brosse est utilisée une matière thermoplastique qui, à la température d'assemblage, présente une résistance à la déformation plus grande que celle de la matière thermoplastique utilisée pour les poils.

4. Procédé selon la revendication 1, caractérisé en ce que pour le support de brosse est utilisé un matériau rigide à la température d'assemblage, par exemple du bois, du métal ou analogues.

5. Procédé selon la revendication , caractérisé en ce que pour un support de brosse constitué d'un matériau rigide, la section transversale plus petite par endroits par rapport à l'épaississement sur les pois est formée par des rugosités de surface ou des inégalités de la paroi des trous.

6. Procédé selon l'une des revendications 1 à 5, caractérisé en ce que l'opération d'assemblage est effectuée à une vitesse accrue de telle façon que le temps d'assemblage est inférieur au temps de relaxation de la et respectivement des matière(s) thermoplastique(s) participante(s).

7. Procédé selon l'une des revendications 1 à 6, caractérisé en ce que le support de brosse et/ou les poils sont refroidis immédiatement après l'assemblage.

8. Procédé selon l'une des revendications 1 à 7, caractérisé en ce que les trous dans le support de brosse sont conformés, dans la région du bord des trous, avec une section libre plus grande que l'épaississement aux extrémités des poils, à laquelle est raccordée une section transversale qui diminue jusqu'à la section minimale.

9. Procédé selon l'une es revendications 1 à 8, caractérisé en ce que les trous dans le support de brosse sont munis, ns la direction d'introduction des poils derrière la section minimale, d'un élargissement de la section transversale.

10. Procédé selon l'une des revendications 1 à 9, caracterisé en ce que le bord des trous sur le support de brosse est conformé sur ceux-ci après la mis en place des poils.

11. Procédé selon l'une des revendications 1 à 10, caractérisé en ce que les épaississements aux extrémités des poils et la paroi des trous du support de brosse également réalisé en matière thermoplastique sont portés à une température d'assemblage située entre la température de solidification et la température de fluage pour es matières thermoplastiques amorphes et respectivement entre celle-ci et la température de fusion des cristallites, pour des matières thermoplastiques partiellement cristallines, et respectivement maintenus à cette température d'assemblage à laquelle les matières thermoplastiques se trouvent dans un état caoutchoutique, et que les épaississements sont insérés à cet état dans les trous et écrasés sur le fond des trous, avec déformation à chaud de la paroi des trous vers l'extérieur.

12. Support de brosse pour la réalisation d'un produit de brosserie suivant le procédé selon l'une des revendications 1 à 11, **caractérisé en ce** que le support de brosse (5) est constitué par un élément de support en forme de plaque avec des saillies (26, 27) en forme de douilles dépassant sur le côté poils ou sur la face arrière, et que les trous (28, 29) sur le support de brosse recevant les poils (2) se trouvent au moins sur une assez grande partie de leur extension axiale à l'intérieur des saillies.

Fig. 1.1

Fig. 1.2

Fig. 1.3

Fig. 1.4

Fig. 2.1

Fig. 2.2

Fig. 2.3

Fig. 2.4

Fig. 2.5

Fig. 2.6

Fig. 2.7

Fig. 3

Fig. 4.1

Fig. 4.2

Fig. 4.3

Fig. 5

Fig. 6

Fig. 7

Fig. 8

Fig. 9